# EUROPEAN PATENT APPLICATION

(11) **EP 4 502 319 A1**
(43) Date of publication of application: **05.02.2025**
(21) Application number: 24774104.4
(22) Date of filing: 19.03.2024
(51) Int. Cl.: E04H 12/24, H02G 7/20, E04H 12/10

(54) **CROSS ARM ASSEMBLY AND POWER TRANSMISSION TOWER**

(30) Priority: 22.03.2023 CN 202310288151
(71) Applicant: Shanghai Shemar Power Engineering Co., Ltd., Shanghai 200050 (CN)
(72) Inventor: LI, Yanlin, Shanghai 200050 (CN); WANG, Xinlong, Shanghai 200050 (CN); WANG, Chen, Shanghai 200050 (CN); WANG, Ying, Shanghai 200050 (CN)
(74) Representative: Arnold & Siedsma
(86) International application number: PCT/CN2024/082440
(87) International publication number: WO 2024/193539

(57) **Abstract**

Disclosed in the present application is a cross arm assembly, comprising: at least one insulator, wherein one end of the at least one insulator is used for connecting to the tower body of a power transmission tower, such that a low-voltage end of the cross arm assembly is formed, and the other end of the at least one insulator serves as an end portion, which is used for hanging a power transmission line, of the cross arm assembly, such that a high-voltage end of the cross arm assembly is formed; and a high-voltage-end fitting, which comprises a fixing portion that is used for connecting to the other end of the insulator, and for hanging at least one power transmission line. Further disclosed in the present application is a power transmission tower. In the present application, a high-voltage end of a cross arm assembly is connected to a high-voltage-end fitting, such that the structure of the high-voltage-end fitting is simplified, and the unbalanced tension of a power transmission line is effectively released, thereby making a power transmission tower meet a longitudinal stress requirement, making the arrangement of a tower head more compact, and making the power transmission tower more economical.

## Description

### TECHNICAL FIELD

The present disclosure relates to a field of power transmission, in particular to a cross arm assembly and a transmission tower.

### BACKGROUND

Generally, in transmission towers in the prior art, transmission lines are hung on a cross arm assembly by means of short suspension fitting strings, and a portion of the unbalanced tension caused by broken lines or uneven icing is released through the suspension fitting strings. Although the length of the suspension fitting strings is short, the influence of wind deflection on the length of the cross arm assembly shall be considered when designing the tower head of the transmission tower, and the electric clearance between the high-voltage ends of the upper and lower cross arm assemblies shall also be considered. As a result, the transmission tower in the prior art has a large tower head size and low economic efficiency.

### SUMMARY

One of objectives of the present disclosure is to provide a cross arm assembly. A high-voltage end fitting, which is connected with a high-voltage end of the cross arm assembly, is simple in structure and can effectively release unbalanced tension of transmission lines, so that tower head arrangement is more compact and the economy efficiency is higher while the longitudinal force requirement is met for the transmission tower.

In order to solve the above problems, the present disclosure adopts the following solutions. A cross arm assembly is provided, and the cross arm assembly includes: at least one insulator, an end of the at least one insulator being configured to be connected with a tower body of a transmission tower, forming a low-voltage end of the cross arm assembly, and the other end of the at least one insulator being configured as an end of the cross arm assembly for hanging a conductor, forming a high-voltage end of the cross arm assembly; and a high-voltage end fitting, including a fixing portion, the high-voltage end fitting being configured to be connected with the other end of the at least one insulator and hang at least one conductor.

In an embodiment, the cross arm assembly includes a post insulator. An end of the post insulator is configured to be connected with the tower body, and the other end of the post insulator is configured as an end of the cross arm assembly for hanging the conductor.

In an embodiment, the cross arm assembly further includes at least one suspension insulator. The end of the post insulator and an end of the suspension insulator are both configured to be connected with the tower body. The other end of the post insulator and the other end of the suspension insulator are connected together through the high-voltage end fitting and configured as the end of the cross arm assembly for hanging the conductor.

In an embodiment, the high-voltage end fitting further includes at least one rotating portion connected with the fixing portion. The rotating portion is rotatably connected with the other end of the insulator, and the high-voltage end fitting is rotatably connected with the high-voltage end of the cross arm assembly.

In an embodiment, the rotating portion has a rotating chamber, the other end of the insulator is provided with a rotating body. The rotating body is rotatable in the rotating chamber, so that the high-voltage end fitting is rotatably connected with the high-voltage end of the cross arm assembly.

In an embodiment, the fixing portion includes an attachment plate and a connecting plate. The attachment plate and the connecting plate are arranged to be perpendicular to each other and fixedly connected. The attachment plate and the connecting plate are configured to be connected with the rotating portion.

In an embodiment, the rotating portion includes a first rotating plate and a first rotating block. The first rotating plate is fixedly connected with the connecting plate. The first rotating block is fixedly connected with a side of the first rotating plate away from the connecting plate. The rotating chamber is formed in the first rotating block.

In an embodiment, the rotating portion includes two second rotating plates and a second rotating block. The two second rotating plates are disposed opposite each other on a same side of the second rotating block at intervals and are arranged parallel to each other. The two second rotating plates clamp on both sides of the attachment plate and are fixedly connected with the attachment plate. The rotating chamber is formed in the second rotating block.

In an embodiment, the rotating body is a ball, and the rotating chamber is a socket.

In an embodiment, the low-voltage end of the cross arm assembly is rotatably connected with the tower body through a hinge assembly. The hinge assembly includes a hinge support and a hinge member. The hinge support is fixedly connected with the tower body. The hinge member is fixedly connected with the cross arm assembly. The hinge support and the hinge member are rotatably connected through a hinge shaft.

In an embodiment, the high voltage end fitting is connected with at least one suspension clamp, and the conductor is directly hung on the suspension clamp.

In an embodiment, at least one line hanging hole is formed on the attachment plate, and a suspension clamp is hung in the line hanging hole.

A second objective of the present disclosure is to provide a transmission tower including a tower body and the cross arm assembly described above, and the cross arm assembly is disposed on the tower body.

The beneficial effects of the present disclosure are described below. Different from the prior art, the high-voltage end fittings are connected with the high-voltage ends of the cross arm assembly, which are simple in structure and can effectively release unbalanced tension of transmission lines. It is therefore not necessary to release the unbalanced tension through a certain length of suspension fitting strings, so that the conductor can be directly hung on the high-voltage end fitting through the suspension clamp. As a result, the tower head arrangement is more compact while the longitudinal force requirement is met for the transmission tower, thereby reducing the overall cost.

At the same time, the low-voltage end of the cross arm assembly is configured to be rotatably connected with the tower body. In this way, the unbalanced tension can be further released, the force on the cross arm assembly can be reduced, and thereby reducing the specifications of the cross arm assembly and costs.

In addition, in the present disclosure, the high-voltage end fitting can hang a single conductor, a twin-conductor bundle, and a triple-conductor bundle, so that the disclosure range is wide and the economic efficiency is high.

### BRIEF DESCRIPTION OF THE DRAWINGS

In order to more clearly illustrate the solutions in the present disclosure, a brief description is given below for the drawings referred in the description of the embodiments. Obviously, the drawings in the following description are merely some embodiments of the disclosure. For those of ordinary skill in the art, other drawings can also be obtained based on these drawings without involving any inventive effort.
FIG. 1 is a schematic diagram illustrating a partial structure of a transmission tower 10 according to an embodiment of the present disclosure;
FIG. 2 is an enlarged schematic diagram at a detail A in FIG. 1;
FIG. 3 is a schematic diagram illustrating a structure of a High-voltage end fitting 110 according to an embodiment of the present disclosure;
FIG. 4 is an enlarged schematic diagram at a detail B in FIG. 1;
FIG. 5 is an enlarged schematic diagram at a detail C in FIG. 1;
FIG. 6 is a schematic diagram illustrating a partial structure of a transmission tower 10 according to another embodiment of the present disclosure;
FIG. 7 is an enlarged schematic diagram at a detail D in FIG. 6; and
FIG. 8 is an enlarged schematic diagram at a detail E in FIG. 6.

### DETAILED DESCRIPTION

The following clearly and completely describes the technical solutions in the embodiments of the present disclosure with reference to the drawings in the embodiments of the present disclosure. Obviously, the described embodiments are only some, not all, of the embodiments of the present disclosure. All other embodiments obtained by those of ordinary skill in the art based on the embodiments of the disclosure without involving creative efforts fall within the protection scope of the disclosure.

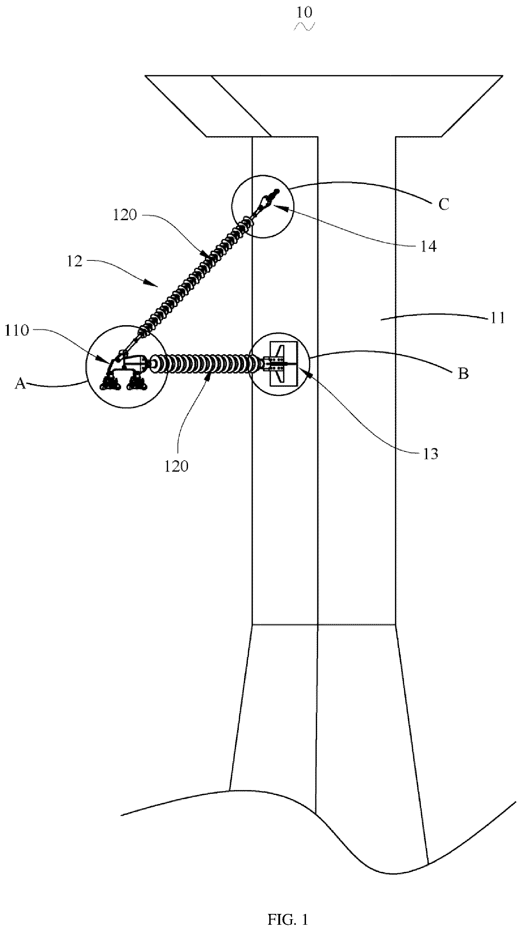

Referring to FIG. 1, in an embodiment of the present disclosure, a transmission tower 10 includes a tower body 11 and a cross arm assembly 12. An end of the cross arm assembly 12, which is a low-voltage end of the cross arm assembly 12, is connected with the tower body 11, while the other end of the cross arm assembly 12, which is a high-voltage end of the cross arm assembly 12, is configured to hang a conductor. The high-voltage end of the cross arm assembly 12 is rotatably connected with a high-voltage end fitting 110.

Further, the cross arm assembly 12 includes at least one insulator 120. An end of the at least one insulator 120 is configured to be connected with the tower body 11 of the transmission tower 10, forming the low-voltage end of the cross arm assembly 12, and the other end of the at least one insulator 120 is configured as the end of the cross arm assembly 12 for hanging the conductor, forming the high-voltage end of the cross arm assembly 12.

In a case where the cross arm assembly 12 includes only one insulator 120, an end of the insulator 120 is configured to be connected with the tower body 11, and the other end of the insulator 120 is connected with the high-voltage end fitting 110 and configured as the end of the cross arm assembly 12 for hanging the conductor. In a case where the cross arm assembly 12 includes a plurality of insulators 120, an end of each of the plurality of insulators 120 is configured to be connected with the tower body 11 of the transmission tower 10, and their another ends are connected together by means of the high-voltage end fitting 110 and configured as the end of the cross arm assembly 12 for hanging the conductor.

In a case where only one insulator 120 is provided, the insulator 120 is a post insulator 121, an end of the post insulator 121 is configured to be connected with the tower body 11 of the transmission tower 10, and the other end of the post insulator 121 is rotatably connected with the high-voltage end fitting 110 and configured as the end of the cross arm assembly 12 for hanging the conductor.

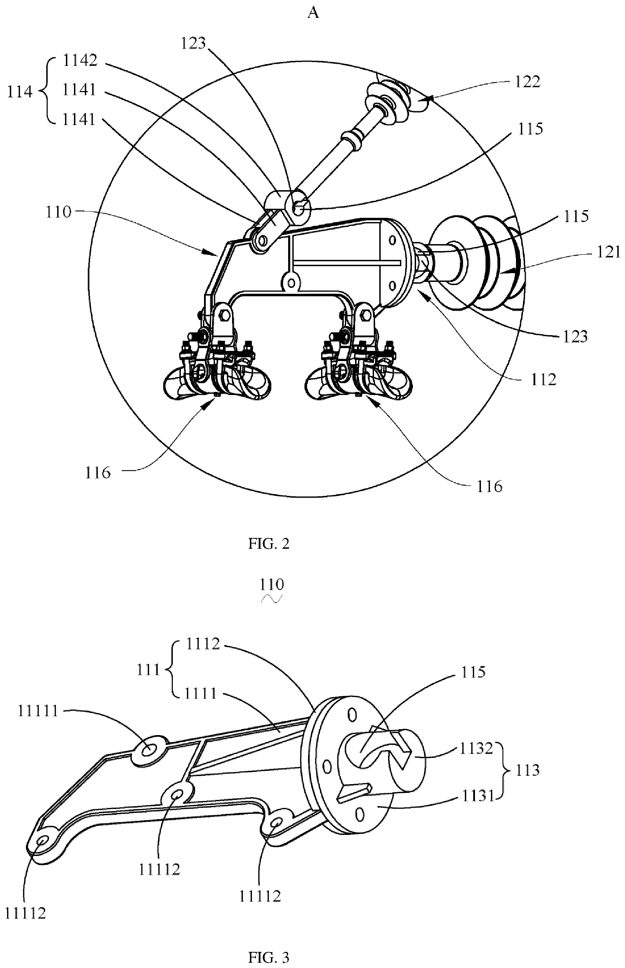

Referring to FIG. 1 and 2, in a case where a plurality of insulators 120 are provided, the plurality of insulators 120 may include the post insulator 121 and a suspension insulator 122. An end of each of the post insulator 121 and the suspension insulator 122 is configured to be connected with the tower body 11 of the transmission tower 10, and their another ends are connected together by means of the high-voltage end fitting 110 and configured as the end of the cross arm assembly 12 for hanging the conductor.

In the present disclosure, the number of post insulators 121 and suspension insulators 122 is not limited, and the number of post insulators 121 and suspension insulators 122 may be one or more. For example, in FIG. 1, the number of post insulators 121 is one and the number of suspension insulators 122 is also one, that is, the cross arm assembly 12 is a single-post single-suspension structure. An end of each of the post insulator 121 and the suspension insulator 122 is configured to be connected with the tower body 11 of the transmission tower 10, and their another ends are connected together forming the end of the cross arm assembly 12 for hanging the conductor. The suspension insulator 122 is located above the post insulator 121. An axis of the suspension insulator 122 and an axis of the post insulator 121 are located in the same vertical plane. Meanwhile, an angle formed between the post insulator 121 and the suspension insulator 122 ranges from 15° to 45°, for example, 15°, 30°, or 45°. The arrangement of the post insulator 121 and the suspension insulator 122 provides a stable triangular structure between the cross arm assembly 12 and the tower body 11 of the transmission tower 10, thereby greatly improving the stability of the cross arm assembly 12.

Referring to FIGS. 1 to 3, the high-voltage end fitting 110 includes a fixing portion 111 and at least one rotating portion 112 connected with the fixing portion 111. At least one line hanging hole 11112 for hanging the conductor is formed on the fixing portion 111. A rotating chamber 115 is formed in the at least one rotating portion 112. The rotating portion 112 is rotatably connected with the other end of the insulator 120 through the rotating chamber 115, so that the fixing portion 111 is rotatably connected with the other end of the insulator 120 through the rotating portion 112.

The fixing portion 111 includes an attachment plate 1111 and a connecting plate 1112. The attachment plate 1111 and the connecting plate 1112 are arranged to be perpendicular to each other and fixedly connected. The attachment plate 1111 is a special-shaped plate, and an end of an upper edge of the attachment plate 1111 away from the connecting plate 1112 is provided with a connecting hole 11111 for connecting the suspension insulator 122. In some application scenarios, the connecting hole 11111 is configured to be connected with the rotating portion 112, and thus to be connected with the suspension insulator 122 through the rotating portion 112. A lower edge of the attachment plate 1111 is provided with three line hanging holes 11112 which are spaced apart from each other. Two line hanging holes 11112 are located at two ends of the lower edge of the attachment plate 1111 respectively, and the other line hanging hole 11112 is located at the middle of the lower edge of the attachment plate 1111. The horizontal height of the line hanging hole 11112 located at the middle of the lower edge of the attachment plate 1111 is greater than that of the line hanging holes 11112 at two ends of the lower edge of the attachment plate 1111, so as to hang a conductor bundle. In the present embodiment, the number of the line hanging holes 11112 is three, which can be used for hanging a single conductor, a twin-conductor bundle, or a triple-conductor bundle, and has a wide application range and a high economic efficiency. In other embodiments, only one, two or more line hanging holes may be provided for hanging a single conductor, a twin-conductor bundle, or other multi-conductor bundles, respectively. Specific positions of the line hanging holes are not specifically limited herein, may be select other positions, and may be adjusted according to the actual use requirements, as long as the conductors do not affect each other.

The high-voltage end fitting 110 is connected with at least one suspension clamp 116, and the conductor is hung on the suspension clamp 116. The suspension clamp 116 is connected with the line hanging hole 11112. When the number of suspension clamps 116 is one, the suspension clamp 116 may be hung on any one of the line hanging holes 11112 for hanging a single conductor. When the number of suspension clamps 116 is two, the suspension clamps 116 may be hung on any two of the line hanging holes 11112 respectively for hanging a twin-conductor bundle. Preferably, the two suspension clamps 116 are respectively hung on the line hanging holes 11112 at two ends of the attachment plate 1111. When the number of suspension clamps 116 is three, the three hanging line holes 11112 may be arranged on the high-voltage end fittings 110 in a triangular scheme, the three suspension clamps 116 can be hung on the three line hanging holes 11112 respectively for hanging a triple-conductor bundle. In other embodiments, a combined structure including a T-shaped plate and a U-shaped hanging ring may also be adopted. An end of the U-shaped hanging ring is connected with the high-voltage end fitting, and the other end of the U-shaped hanging ring is connected with the T-shaped plate. Two side ends and a bottom end of the T-shaped plate are configured to be connected with the suspension clamp for hanging the triple-conductor bundle. The conductor is directly hung on the high-voltage end fitting 110 by the suspension clamp 116, so that the influence of wind deflection on the length of the cross arm assembly 12 does not need to be taken into account, and a vertical distance of the cross arm assembly 12 can be further shortened. As a result, the arrangement of the tower head of the transmission tower 10 is more compact than that of a conventional transmission tower.

It should be noted that the above-mentioned upper edge, lower edge and horizontal height refer to relative positions when the high-voltage end fitting 110 is mounted on the cross arm assembly 12. That is, when the high-voltage end fitting 110 is mounted on the cross arm assembly 12, the connecting hole 11111 is located above, the line hanging holes 11112 are located below, an edge of the high-voltage end fitting 110 away from the ground is the upper edge, an edge of the high-voltage end fitting 110 close to the ground is the lower edge, and a vertical distance between a horizontal plane where the target object is located and the ground is the horizontal height.

The connecting plate 1112 is a circular plate, and is vertically fixedly connected with an end of the attachment plate 1111 away from the connecting hole 11111. A connecting position between the attachment plate 1111 and the connecting plate 1112 is located on a first center line of the connecting plate 1112, that is, a radial direction on a plate surface of the connecting plate 1112, so that the high-voltage end fitting 110 is evenly stressed after being mounted on the cross arm assembly 12 to avoid eccentric load. Four mounting holes are formed on the connecting plate 1112 circumferentially around the center of the connecting plate 1112 to facilitate connecting the post insulator 121. In some application scenarios, the connecting plate 1112 may be connected with the rotating portion 112 by means of the four mounting holes formed thereon, and may be connected with the post insulator 121 through the rotating portion 112. Further, two first reinforcing ribs are symmetrically arranged between the attachment plate 1111 and the connecting plate 1112. The two first reinforcing ribs are both right-angle triangular plates, and are respectively located on two sides of the attachment plate 1111. That is, shorter sides of the two first reinforcing ribs are symmetrically abutted on a second center line of the connecting plate 1112, i.e., on another radial direction on the plate surface of the connecting plate 1112. Longer sides of the first reinforcing ribs are abutted on the two side faces of the attachment plate 1111 respectively. The second center line is perpendicular to the first center line, and each of the two first reinforcing ribs is perpendicular to both the attachment plate 1111 and the connecting plate 1112. The arrangement of the first reinforcing ribs can improve the connection strength between the attachment plate 1111 and the connecting plate 1112, thereby improving the mechanical strength of the high-voltage end fitting 110 as a whole.

In an application scenario, referring to FIG. 3, the rotating portion 112 is a first rotating portion 113, fixedly connected with the connecting plate 1112 of the fixing portion 111, and located on a side of the connecting plate 1112 away from the attachment plate 1111. The first rotating portion 113 includes a first rotating plate 1131 and a first rotating block 1132. The first rotating plate 1131 is a circular plate with the same size as the connecting plate 1112. Four first rotating holes are formed circumferentially around the center of the first rotating plate 1131 on the first rotating plate 1131. The four first rotating holes on the first rotating plate 1131 are in one-to-one correspondence with the four mounting holes on the connecting plate 1112. The first rotating plate 1131 and the connecting plate 1112 are fixedly connected by providing fasteners such as bolts inserted into the corresponding first rotating holes and mounting holes, nuts matched with the bolts, etc., so that the first rotating portion 113 and the fixing portion 111 are fixedly connected. The first rotating block 1132 is a cylindrical block, fixedly connected with the side of the first rotating plate 1131 away from the connecting plate 1112, and located at the center of the first rotating plate 1131. Two second reinforcing ribs are symmetrically arranged between the first rotating block 1132 and the first rotating plate 1131. The two second reinforcing ribs are both right-angle trapezoidal plates, and are respectively located on two sides of the first rotating block 1132. That is, lower base edges of the two second reinforcing ribs are symmetrically abutted on a center line of the first rotating plate 1131, i.e., on a radial direction on the plate surface of the first rotating plate 1131. The right-angle side edges are respectively abutted on two sides of the first rotating block 1132. This means that, each of the two second reinforcing ribs is perpendicular to both the first rotating block 1132 and the first rotating plate 1131. The arrangement of the second reinforcing ribs can improve the connection strength between the first rotating block 1132 and the first rotating plate 1131. In other embodiments, the first reinforcing rib and the second reinforcing rib may be provided with three, four or more, may be provided with other shapes, or may not be provided. These are not specifically limited herein, as long as the design meets a specific strength requirement. In other embodiments, the connecting plate and the first rotating plate may be integrally formed or connected together by welding.

In another application scenario, referring to FIG. 2, the rotating portion 112 is a second rotating portion 114 connected with the connecting hole 11111 of the fixing portion 111. The second rotating portion 114 includes two second rotating plate 1141 and a second rotating block 1142. The two second rotating plates 1141 are disposed opposite each other on the same side of the second rotating block 1142 at intervals, and the two second rotating plates 1141 are arranged parallel to each other. Each of the two second rotating plates 1141 is provided with a second rotating hole corresponding to the connecting hole 11111, and the two second rotating holes on the two second rotation plates 1141 are arranged coaxially. The second rotating portion 114 clamps on both sides of the connecting hole 11111 by means of the two second rotating plates 1141, so that the two second rotating holes and the connecting hole 11111 are coaxial with each other. The second rotating plate 1141 and the attachment plate 1111 are then fixedly connected by providing fasteners such as bolts inserted into the two second rotating holes and the connecting hole 11111, nuts matched with the bolts, etc., so that the second rotating portion 114 and the fixing portion 111 are fixedly connected. The second rotating block 1142 is an irregular block, with one side surface being a plane and the other side surface being a circular arc surface. The two second rotating plates 1141 are disposed opposite each other on the side surface of the second rotating block 1142 being a plane at intervals. In other embodiments, the second rotating portion may include one second rotating plate and one second rotating block. The second rotating plate is affixed to a side of the attachment plate, so that the second rotating hole and the connecting hole are coaxially arranged for connection.

The rotating portion 112 has a rotating chamber 115, that is, both the first rotating portion 113 and the second rotating portion 114 have a rotating chamber 115 inside. The rotating chamber 115 can be matched with the rotating body 123 for rotational connection. In the first rotating portion 113, the rotating chamber 115 is formed in the first rotating block 1132. In the second rotating portion 114, the rotating chamber 115 is formed in the second rotating block 1142. The other end of the at least one post insulator 121 and/or the at least one suspension insulator 122 is connected with the rotating body 123. The rotating body 123 is rotatable in the rotating chamber 115, so that the high-voltage end fitting 110 is rotatably connected with the high-voltage end of the cross arm assembly 12. When the cross arm assembly 12 is not mounted to the tower body 11, the rotating body 123 can rotate 360° around the axis of the corresponding insulator 120 in the rotating chamber 115, which allows the angle of the post insulator 121 and/or the suspension insulator 122 to be adjusted quickly, so as to facilitate subsequent mounting. When the cross arm assembly 12 is mounted on the tower body 11, the rotating body 123 can rotate at multiple angles in the rotating chamber 115, which effectively releases the unbalanced tension of the transmission line, so that the conductor can be directly hung on the high-voltage end fitting 110 through the suspension clamp 116. It is therefore not necessary to release the unbalanced tension by setting a certain length of suspension fitting strings at the high-voltage end of the cross arm assembly as in the prior art. As a result, the tower head arrangement is more compact while the longitudinal force requirement is met for the transmission tower 10, thereby reducing the overall cost.

In the present embodiment, the rotating body 123 is a ball, and the rotating chamber 115 is a socket. This means that the other end of the at least one post insulator 121 and/or the at least one suspension insulator 122 is connected with the ball, and the first rotating portion 113 and/or the second rotating portion 114 has a socket formed therein. That is, the first rotating block 1132 and/or the second rotating block 1142 is provided with a socket therein. The ball can rotate in the socket. In other embodiments, the rotating body and the rotating chamber may also be other mutually cooperating rotating structures, such as a cylindrical body and a cylindrical chamber, which may be designed according to specific requirements, and are not specifically limited herein.

In the present embodiment, the cross arm assembly 12 has a single-post single-suspension structure. The high-voltage end fitting 110 is connected with one first rotating portion 113 and one second rotating portion 114. The other ends of the post insulator 121 and the suspension insulator 122 are both connected with the rotating bodies 123. The rotating body 123 at the other end of the post insulator 121 is rotatably connected with the first rotating portion 113, and the rotating body 123 at the other end of the suspension insulator 122 is rotatably connected with the second rotating portion 114, so that the high-voltage end fitting 110 is completely rotatably connected with the cross arm assembly 12. In other embodiments, the high-voltage end fitting may be provided with only one first rotating portion or one second rotating portion, and correspondingly, only the other end of the post insulator or the suspension insulator may be connected with the rotating body, so that the high-voltage end fitting is partially rotatably connected with the cross arm assembly. When the cross arm assembly has other structures such as single-post double-suspension, single-post triple-suspension, double-post double-suspension, or the like, one or more first rotating portions and/or second rotating portions may be provided. The other end of any one or more insulators is connected with a rotating body to have the high-voltage end fittings partially or completely rotatably connected with the cross arm assembly. The number of the rotating portions of the high-voltage end fittings and the number of the rotating bodies of the insulators may be adjusted to match with each other according to the specific structure of the cross arm assembly, which is not specifically limited herein.

The attachment plate 1111 of the fixing portion 111 is prepared by a forging process. The thickness of the peripheral edge of the attachment plate 1111, the thickness of the edges of the connecting holes 11111 and the line hanging holes 11112, and the thickness of the plate surface at the center line position where the middle line hanging hole 11112 is located are set to be greater than the thickness of the plate surface at other positions of the attachment plate 1111, so that the production and processing are facilitated, and the mechanical performance of the attachment plate 1111 is improved. The connecting plate 1112 is prepared by casting process, and the production is simple. The attachment plate 1111 and the connecting plate 1112 are respectively molded and connected together by welding to form the fixing portion 111. In other embodiments, the attachment plate may also be prepared by other processes such as casting, the attachment plate may also be provided with a uniform thickness, or the attachment plate may also be provided with other shapes. The connecting plate may also be prepared by other processes such as forging, or the connecting plate and the attachment plate may also be directly integrally formed as a fixing portion. These may be designed according to specific requirements, and are not specifically limited herein.

In other embodiments, the high-voltage end fitting may not be provided with a rotating portion, the cross arm assembly includes at least one insulator, and the other end of the at least one insulator is fixedly connected with the high-voltage end fitting. That is, the high-voltage end fitting only includes the fixing portion. The structure of the fixing portion is as described above, and does not be repeated here again. The other end of the insulator is directly fixedly connected with the mounting hole on the connecting plate or the connecting hole on the attachment plate. The structure of the high-voltage end fitting is further simplified and the manufacturing cost is reduced while the conductor is directly hung on the high-voltage end fitting without the suspension fitting strings.

In an application scenario, referring to FIGS. 1, 4 and 5, the low voltage end of the cross arm assembly 12 is fixedly connected with the tower body 11. An end of the post insulator 121 is fixedly connected with the tower body 11 through the first connection assembly 13, and an end of the suspension insulator 122 is fixedly connected with the tower body 11 through the second connection assembly 14, so that the connection between the cross arm assembly 12 and the tower body 11 is reliable.

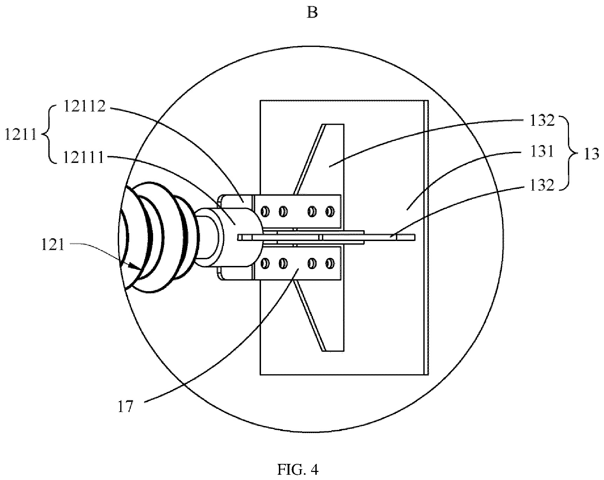

Referring to Fig. 1 and Fig. 4, the first connection assembly 13 includes a connecting base plate 131 and connecting lugs 132. The connecting lugs 132 are fixedly arranged on the connecting base plate 131. The connecting base plate 131 is fixedly connected with the tower body 11. The connecting lugs 132 are fixedly connected with the post insulator 121. A plurality of through holes are formed on the connecting base plate 131, and a plurality of through holes are formed on the tower body 11 correspondingly. The connecting base plate 131 and the tower body 11 are fixedly connected by providing fasteners such as bolts inserted into the corresponding through holes on the connecting base plate 131 and the tower body 11, nuts matched with the bolts, etc.

Further, in order to securely connect the post insulators 121, the first connection assembly 13 is provided with four connecting lugs 132, which are symmetrically arranged around the center of the connecting base plate 131 in a cross shape, and an end of each of the four connection lugs 132 is abutted against each other. The connecting lugs 132 are right-angle trapezoidal shaped plate members. A right-angle side edge of each of the connecting lugs 132 (i.e., the right-angle waist of the right-angle trapezoidal shape) is affixed to the connecting base plate 131, and a lower base edge of each of the connecting lugs132 is abutted with other connecting lugs, i.e., the lower base edges of the four connecting lugs 132 are abutted with each other. The material cost is reduced while improving the connection strength of the connection lugs 132. The connecting lugs 132 are fixed to the connecting base plate 131 by welding. Of course, in other embodiments, the connecting lugs may be provided with two, three or more, which is not specifically limited herein, as long as the post insulator can be stably connected with the tower body.

The post insulator 121 is fixedly connected with the first connection assembly 13 through a connection member 17. A first flange 1211 is formed at the end of the post insulator 121 close to the tower body 11. The first flange 1211 includes a first sleeve 12111 and a cross-shaped insert plate 12112. The first sleeve 12111 is fixedly connected with an end of the post insulator 121. The cross-shaped insert plate 12112 is fixedly arranged at an end of the first sleeve 12111 away from the post insulator 121. The cross-shaped insert plate 12112 is fixedly connected with the connecting lugs 132 through a connection member 17, so that the post insulator 121 is fixedly connected with the first connection assembly 13.

An end of the cross-shaped insert plate 12112 away from the first sleeve 12111 is abutted with a cross top of the connecting lugs 132 correspondingly. The connection member 17 includes four angle steels set back to back with each other. Each of the angle steels includes two plates perpendicularly connected with each other, and the cross section of each of the angle steels is L-shaped. Each angle steel is arranged between two adjacent connecting lugs 132 and adjacent plate surfaces of the cross-shaped insert plate 12112, that is, the plates perpendicular to each other of each angle steel are abutted the adjacent connecting lugs 132 and the adjacent plate surfaces of the cross-shaped insert plate 12112 respectively at the same time, and each angle steel is fixedly connected with the connecting lugs 132, the cross-shaped insert plate 12112 and an adjacent angle steel at the same time, thereby fixedly connecting the first connection assembly 13 and the post insulator 121. A plurality of through holes are formed on the cross-shaped insert plate 12112. A plurality of through holes are also formed on the connecting lugs 132 close to the position where the four connecting lugs 132 are abutted with each other. A plurality of through holes are also formed on a corresponding position of the connection member 17 where the connection member 17 is abutted with the cross-shaped insert plate 12112 and the connecting lug 132. The cross-shaped insert plate 12112 and the connecting lugs 132 are fixedly connected by providing fasteners such as bolts inserted into the corresponding through holes on the cross-shaped insert plate 12112, the connecting lug 132 and the connection member 17, nuts matched with the bolts, etc. In other embodiments, the connection member may be provided as two, three or more angle steels, or the connection member may be a structure formed by plate-like members, or the cross-shaped insert plate, the connecting lug, and the connection member may be fixedly connected by welding or the like, which is not specifically limited herein, as long as the cross-shaped insert plate and the connecting lug can be fixedly connected.

Further, a plurality of through holes are formed on the connection member 17, the shapes and sizes of each through-hole are consistent, and each through-hole is located at different positions on the connection member. Any through-hole on the connection member 17 can be selected to be fixedly connected with the through-holes formed on the cross-shaped insert plate 12112 and the connecting lug 132. The through holes on the connection member 17 used for connecting the cross-shaped insert plate 12112 and the connecting lug 132 in one case are defined as a group of through holes, and the through holes on the connection member 17 can be divided into multiple groups. Each group of through holes can be used for fixedly connecting the cross-shaped insert plate 12112 and the connecting lug 132, so that a relative distance between the cross-shaped insert plate 12112 and the connecting lug 132 is adjustable, redundancy of mounting is increased, mounting difficulty is reduced, and mounting efficiency is improved.

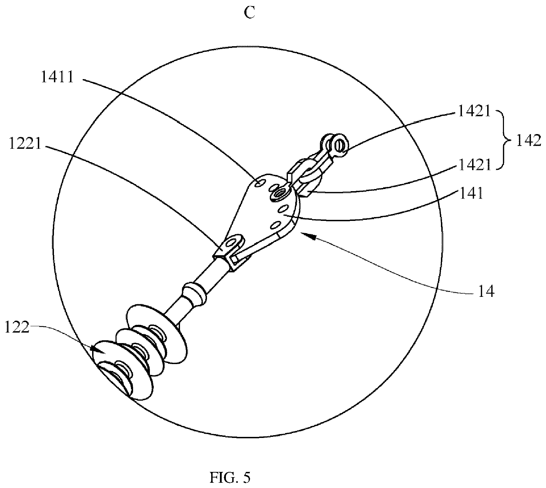

Referring to FIG. 1 and FIG. 5, the second connection assembly 14 includes a first sub-connecting fitting 141 and a second sub-connecting fitting 142. The first sub-connecting fitting 141 is configured to be connected with the suspension insulator 122. An end of the second sub-connecting fitting 142 is adjustably connected with the first sub-connecting fitting 141, and the other end of the second sub-connecting fitting 142 is configured to be connected with the tower body 11, so that the suspension insulator 122 is fixedly connected with the tower body 11.

The first sub-connecting fitting 141 is a fan-shaped flat-angle fitting, and has a plurality of mounting portions 1411 arrayed in an arc shape. The second sub-connecting fitting 142 is alternatively connected with one mounting portion 1411. The second sub-connecting fitting 142 includes a plurality of mutually connected U-rings 1421. By providing the plurality of mounting portions 1411 and the plurality of U-rings 1421 to be used in combination, a distance and a relative angle between the tower body 11 and the suspension insulator 122 can be adjusted, so that the mounting redundancy is increased, the mounting difficulty is reduced, and the mounting efficiency is improved.

The suspension insulator 122 is fixedly connected with the first sub-connecting fitting 141 by a fastener. An end of the suspension insulator 122 is provided with a U-shaped groove fitting 1221. Through holes are formed on both of the plate surfaces of the U-shaped groove fitting 1221, and through holes are correspondingly formed on the first sub-connecting fitting 141. The first sub-connecting fitting 141 and the U-shaped groove fitting 1221 are fixedly connected by providing fasteners such as bolts inserted into the through holes on the first sub-connecting fitting 141 and the U-shaped groove fitting 1221, nuts matched with the bolts, etc. In other embodiments, several mounting portions can also be arranged in a straight line along an extension direction of the suspension insulator, which is not specifically limited herein. It may be the second sub-connecting fitting that is connected with the suspension insulator, while the first sub-connecting fitting is connected with the tower body, which is not specifically limited herein.

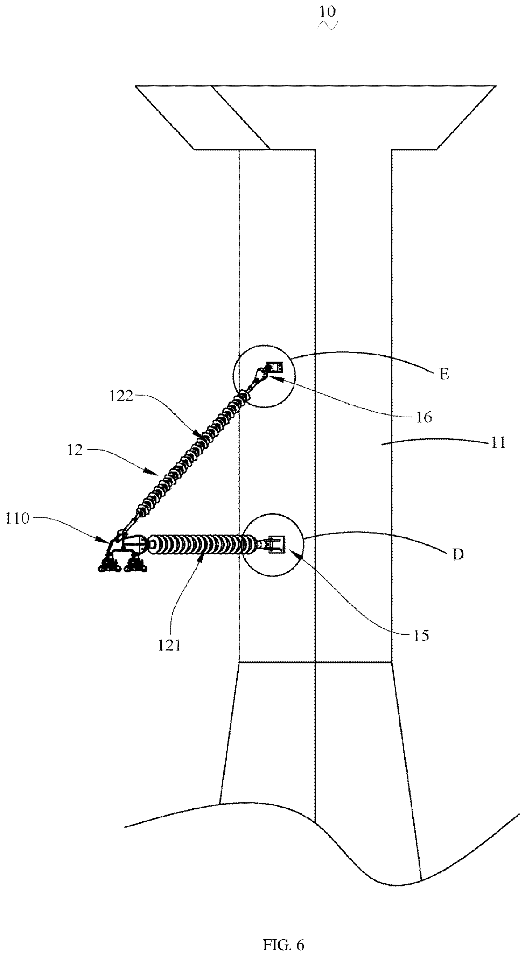

In another application scenario, referring to FIGS. 6 to 8, the low-voltage end of the cross arm assembly 12 is rotatably connected with the tower body 11. An end of the post insulator 121 is connected with the tower body 11 through a first hinge assembly 15 so that the post insulator 121 can rotate in a horizontal plane. An end of the suspension insulator 122 is connected with the tower body 11 through a second hinge assembly 16 so that the suspension insulator 122 can rotate in the horizontal plane. In this way, the unbalanced tension can be further released, the force on the cross arm assembly 12 can be reduced, and thereby reducing the specifications of the cross arm assembly 12 and reducing costs.

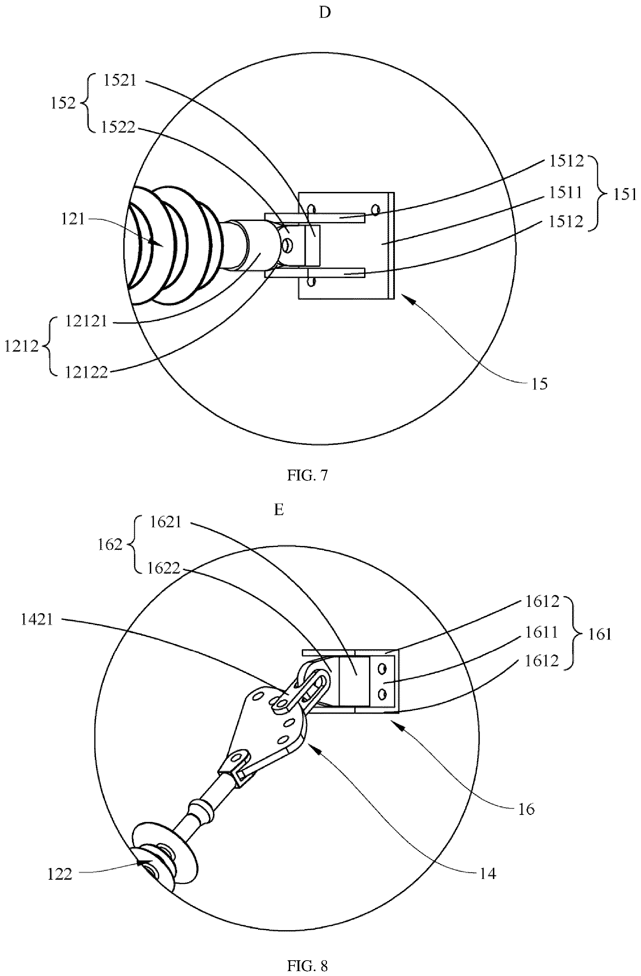

Referring to FIG. 7, the first hinge assembly 15 includes a first hinge support 151 and a first hinge member 152. The first hinge support 151 is fixedly connected with the tower body 11. The first hinge member 152 is fixedly connected with the post insulator 121. The first hinge support 151 and the first hinge member 152 are rotatably connected through a first hinge shaft. The first hinge support 151 includes a first hinge base plate 1511 and two first hinge side plates 1512 spaced opposite each other at intervals. A plurality of through holes are formed on the first hinge base plate 1511, and a plurality of through holes are formed on the tower body 11 correspondingly. The first hinge base plate 1511 and the tower body 11 are fixedly connected by providing fasteners such as bolts inserted into the corresponding through holes on the first hinge support 151 and the tower body 11, nuts matched with the bolts, etc. The two first hinge side plates 1512 are fixed on the first hinge base plate 1511 at intervals, the plate surfaces of the two first hinge side plates 1512 are arranged in parallel with each other, and through holes are formed on the two first hinge side plates 1512 correspondingly. The first hinge member 152 includes a first hinge portion 1521 and a U-shaped member 1522. The first hinge portion 1521 has a columnar structure. The first hinge portion 1521 is disposed between the two first hinge side plates 1512. Through-holes are correspondingly formed on the first hinge portion 1521 along its axial direction. By providing a rotating member such as a first hinge shaft to pass through the through-holes of the two first hinge side plates 1512 and the through-hole of the first hinge member 152, the first hinge member 152 is rotatably connected with the first hinge support 151.

The post insulator 121 is fixedly connected with the first hinge member 152 by fasteners. A second flange 1212 is formed at an end of the post insulator 121 close to the tower body 11. The second flange 1212 includes a second sleeve 12121 and an insert plate 12122. The second sleeve 12121 is fixedly connected with an end of the post insulator 121. The insert plate 12122 is fixedly arranged at an end of the second sleeve 12121 away from the post insulator 121. A through hole is formed on the insert plate 12122. A U-shaped member 1522 of the first hinge member 152 is connected with an end of the first hinge portion 1521 away from the first hinge support 151. Through holes are formed on both of the plate surfaces of the U-shaped member 1522. The insert plate 12122 and the U-shaped member 1522 are fixedly connected by providing fasteners such as bolts inserted into the corresponding through holes on the insert plate 12122 and the U-shaped member 1522, nuts matched with the bolts, etc. In other embodiments, the insert plate and the U-shaped member may be fixedly connected by welding or the like, which is not specifically limited herein.

Referring to FIG. 8, the second hinge assembly 16 includes a second hinge support 161 and a second hinge member 162. The second hinge support 161 is fixedly connected with the tower body 11. The second hinge member 162 is fixedly connected with the suspension insulator 122. The second hinge support 161 and the second hinge member 162 are rotatably connected through a second hinge shaft. The second hinge support 161 includes a second hinge base plate 1611 and two second hinge side plates 1612 arranged at intervals. The specific structure of the second hinge support 161 is similar to the overall structure of the first hinge support 151, and does not be described repeatedly here. The second hinge member 162 includes a second hinge portion 1621 and an arc-shaped plate 1622. The second hinge portion 1621 has a columnar structure. The second hinge portion 1621 is disposed between the two second hinge side plates 1612. Through-holes are formed on the second hinge portion 1621 along its axial direction. By providing a rotating member such as a second hinge shaft to pass through the through-holes of the two second hinge side plates 1612 and the through-hole of the second hinge member 162, the second hinge member 162 is rotatably connected with the second hinge support 161.

The suspension insulator 122 is fixedly connected with the second hinge assembly 16 through the second connection assembly 14. The specific structure of the second connection assembly 14 and a connecting manner between the suspension insulator 122 and the second connection assembly 14 are as described above and does not be described repeatedly here. The second connection assembly 14 and the second hinge assembly 16 are fixedly connected by providing matching bolts inserted into the corresponding through holes on the U-ring 1421 of the second connection assembly 14 and an arc-shaped plate 1622 of the second hinge member 162, nuts matched with the bolts, etc.

In the present embodiment, the axis of the post insulator 121 is horizontally arranged to facilitate mounting and wiring of the high-voltage end fitting 110. When two or more wires are hung by the high-voltage end fitting 110, it is usually necessary to dispose two wires of them at the same horizontal height. When the horizontally arranged post insulator 121 is connected with the high-voltage end fitting 110, a mounting angle of the high-voltage end fitting 110 is not required to be considered in the design, and the high-voltage end fitting 110 can be directly horizontally mounted to hang wires. The design and mounting operation are simple. In other embodiments, the axis of the post insulator may be inclined upward with respect to the horizontal direction, and a specific inclination angle may be designed according to the requirements, as long as a mounting angle of the high-voltage end fitting is correspondingly adjusted, and then the hanging wires meet the requirements. In a case of carrying the same load, compared with horizontally arranged post insulator, the inclined post insulator bear less stress, and in the case of carrying the same load, the inclined post insulator can be an insulator with smaller specification, so as to ensure safety and improve economic efficiency.

In the present embodiment, a rotation axis of the post insulator 121 and a rotation axis of the suspension insulator 122 are collinear, and the rotation axis is in the vertical direction. When longitudinal unbalanced tension occurs on the wires on both sides of the cross arm assembly 12, the post insulator 121 and the suspension insulator 122 can deflect in the horizontal plane, and a span of the wires on both sides (a horizontal distance between wire hanging points of two adjacent transmission towers) and other parameters can be changed, so that when the deflection reaches an appropriate position, the tension of wires on both sides reaches a new balance, and the release of the longitudinal unbalanced tension is completed.

In other embodiments, the rotation axis may be inclined with respect to the vertical direction, and the inclination angle of the rotation axis may be designed according to the requirements, only the connection structure of the transmission tower is required to be correspondingly adjusted. Since a rotation trajectory of the high-voltage end of the cross arm assembly is an arc trajectory with a radius being a perpendicular distance from the high-voltage end to the rotation axis in a rotation plane perpendicular to the rotation axis. For the rotation axis vertically arranged, the high-voltage end rotates in the horizontal rotation plane and does not move upward in the vertical direction. When the rotation axis is inclined with respect to the vertical direction, the rotation plane perpendicular to the rotation axis is inclined upward with respect to the horizontal direction, so that the high-voltage end tends to move upward when the post insulator and the suspension insulator rotate around the inclined rotation axis, that is, when the post insulator and the suspension insulator do not rotate, the high-voltage end is in a static state and located at the lowest point. When the post insulator and suspension insulator rotate relative to the tower body, the high-voltage end moves upward. However, the high-voltage end of the cross arm assembly bears a vertical downward load due to the weight of the hanging wires and the cross arm assembly itself, which can suppress a tendency of upward movement of the high-voltage end, and thereby suppressing the continuous rotation of the cross arm assembly, so as to avoid an effect that an electric clearance between the wires and the tower body is insufficient due to the large rotation angle of the cross arm assembly, and when the post insulator and the suspension insulator no longer rotate, the cross arm assembly reaches a balanced state.

In another embodiment, the cross arm assembly includes one post insulator and at least two suspension insulators, that is, the number of the suspension insulators may be two, three or more. An end of each of the post insulator and the at least two suspension insulators is configured to be connected with the tower body of the transmission tower, and their another ends are connected together by means of the high-voltage end fitting, thereby forming the end of the cross arm assembly for hanging the conductor.

In cases where the number of suspension insulators is more than two, the cross arm assembly has a structure of single-post double-suspension, a structure of single-post triple-suspension or other structures correspondingly, and several suspension insulators are arranged at intervals around the post insulators. In a case where the cross arm assembly has the structure of single-post double-suspension, the two suspension insulators are located above the post insulator, and an angle between the post insulator and the suspension insulator ranges from 15° to 45°, for example, 15°, 30°, or 45°. In a case where the cross arm assembly has the structure of single-post triple-suspension and axes of two suspension insulators are in the same plane as the axis of the post insulator, these two suspension insulators are defined as first suspension insulators, and the other suspension insulator is defined as a second suspension insulator. Distances between the second suspension insulator and each of the two first suspension insulators are equal. An angle between the two first suspension insulators ranges from 45° to 90°, for example, 45°, 60°, or 90°. An angle between the second suspension insulator and the post insulator ranges from 25° to 45°, for example, 25°, 30°, 35°, or 45°.

The high-voltage end fitting is correspondingly provided with one first rotating portion and at least two second rotating portions. The number of the second rotating portion is the same as the number of the suspension insulators. The other end of the post insulator is rotatably connected with the first rotating portion. The other end of each of the at least two suspension insulators is rotatably connected with each of the second rotating portion. It should be noted that no matter the number of suspension insulators is one, two, three or more, its connection relationship with the high-voltage end fittings is universal.

In yet another embodiment, the cross arm assembly includes two post insulators and two suspension insulators, i.e., the cross arm assembly has a structure of double-post double-suspension. An end of each of the two post insulators and the two suspension insulator is configured to be connected with the tower body of the transmission tower, and their another ends are connected together by means of the high-voltage end fitting, thereby forming the end of the cross arm assembly for hanging the conductor. The two suspension insulators are located on the same side of the two post insulators and are respectively arranged adjacent to the two post insulators. Meanwhile, an angle formed between the two post insulators ranges from 20° to 50°, for example, 20°, 30°, 40°, 45° or 50°. An angle formed between the post insulator and its adjacent suspension insulator ranges 15° to 45°, for example, 15°, 30°, or 45°. The arrangement of the two post insulators and the two suspension insulators provides a stable triangular structure between the cross arm assembly and the tower body of the transmission tower, thereby greatly improving the stability of the cross arm assembly.

The high-voltage end fitting is correspondingly provided with two first rotating portions and two second rotating portions. The other ends of the two post insulators are rotatably connected with the two first rotating portions respectively. The other ends of the two suspension insulators are rotatably connected with the two second rotating portion respectively.

In still another embodiment, the cross arm assembly may not be provided with a suspension insulator, and the cross arm assembly includes only one post insulator. When the number of post insulators is one, the cross arm assembly has a structure of single-post. An end of the post insulator is configured to be connected with the tower body of the transmission tower, and the other end is directly connected with the high-voltage end fitting and configured as the end of the cross arm assembly for hanging the conductor. The high-voltage end fitting is provided with only one first rotating portion. The other end of the post insulator is rotatably connected with the first rotating portion.

The advantages of the present disclosure are described below. Different from the prior art, the high-voltage end fittings are connected with the high-voltage ends of the cross arm assembly, which are simple in structure and can effectively release unbalanced tension of transmission lines. It is therefore not necessary to release the unbalanced tension through a certain length of suspension fitting strings, so that the conductor can be directly hung on the high-voltage end fitting through the suspension clamp. As a result, the tower head arrangement is more compact while the longitudinal force requirement is met for the transmission tower, thereby reducing the overall cost.

At the same time, the low-voltage end of the cross arm assembly is configured to be rotatably connected with the tower body. In this way, the unbalanced tension can be further released, the force of the cross arm assembly can be reduced, and thereby reducing the specifications of the cross arm assembly and reducing costs.

In addition, in the present disclosure, the high-voltage end fitting can hang a single conductor, a twin-conductor bundle, and a triple-conductor bundle, so that the disclosure range is wide and the economic efficiency is high.

The above only describes some embodiments of the present disclosure, and does not limit the scope of protection of the present disclosure. Any equivalent structure or equivalent process transformation made on the basis of the description and the drawings of the present disclosure, being directly or indirectly applied in other related technical fields, are likewise included in the protection scope of the disclosure.

## Claims

1. A cross arm assembly comprising:
at least one insulator, an end of the at least one insulator being configured to be connected with a tower body of a transmission tower, forming a low-voltage end of the cross arm assembly, and another end of the at least one insulator being configured as an end of the cross arm assembly for hanging a conductor, forming a high-voltage end of the cross arm assembly; and
a high-voltage end fitting, comprising a fixing portion, the high-voltage end fitting being configured to be connected with the other end of the at least one insulator and hang at least one conductor.

2. The cross arm assembly of claim 1, wherein the cross arm assembly comprises a post insulator, an end of the post insulator is configured to be connected with the tower body, and another end of the post insulator is configured as the end of the cross arm assembly for hanging the conductor.

3. The cross arm assembly of claim 2, wherein the cross arm assembly further comprises at least one suspension insulator, the end of the post insulator and an end of the suspension insulator are both configured to be connected with the tower body, and the other end of the post insulator and another end of the suspension insulator are connected together through the high-voltage end fitting and configured as the end of the cross arm assembly for hanging the conductor.

4. The cross arm assembly of claim 1, wherein the high-voltage end fitting further comprises at least one rotating portion connected with the fixing portion, the rotating portion is rotatably connected with the other end of the insulator, and the high-voltage end fitting is rotatably connected with the high-voltage end of the cross arm assembly.

5. The cross arm assembly of claim 4, wherein the rotating portion has a rotating chamber, the other end of the insulator is provided with a rotating body, and the rotating body is rotatable in the rotating chamber, so that the high-voltage end fitting is rotatably connected with the high-voltage end of the cross arm assembly.

6. The cross arm assembly of claim 5, wherein the fixing portion comprises an attachment plate and a connecting plate, the attachment plate and the connecting plate are arranged to be perpendicular to each other and fixedly connected, and the attachment plate and the connecting plate are configured to connect the rotating portion.

7. The cross arm assembly of claim 6, wherein the rotating portion comprises a first rotating plate and a first rotating block, the first rotating plate is fixedly connected with the connecting plate, the first rotating block is fixedly connected with a side of the first rotating plate away from the connecting plate, and the rotating chamber is formed in the first rotating block.

8. The cross arm assembly of claim 6, wherein the rotating portion comprises two second rotating plates and a second rotating block, the two second rotating plates are disposed opposite each other on a same side of the second rotating block at intervals and are arranged parallel to each other, the two second rotating plates clamp on both sides of the attachment plate and are fixedly connected with the attachment plate, and the rotating chamber is formed in the second rotating block.

9. The cross arm assembly of claim 5, wherein the rotating body is a ball, and the rotating chamber is a socket.

10. The cross arm assembly of claim 1, wherein the low-voltage end of the cross arm assembly is rotatably connected with the tower body through a hinge assembly, the hinge assembly comprises a hinge support and a hinge member, the hinge support is fixedly connected with the tower body, the hinge member is fixedly connected with the cross arm assembly, and the hinge support and the hinge member are rotatably connected through a hinge shaft.

11. The cross arm assembly of claim 1, wherein the high-voltage end fitting is connected with at least one suspension clamp, and the conductor is directly hung on the suspension clamp.

12. The cross arm assembly of claim 6, wherein at least one line hanging hole is formed on the attachment plate, and a suspension clamp is hung in the line hanging hole.

13. A transmission tower, comprising: a tower body and the cross arm assembly of any one of claims 1 to 12, wherein the cross arm assembly is disposed on the tower body.
